# EUROPEAN PATENT SPECIFICATION

(11) **EP 0 456 293 B1**
(45) Date of publication and mention of the grant of the patent: **06.09.1995**
(21) Application number: 91200863.8
(22) Date of filing: 12.04.1991
(51) Int. Cl.: H01G 2/24, B41M 1/34

(54) **Method of manufacturing a ceramic multilayer capacitor having a marking**
Verfahren zum Herstellen mit Merkzeichen versehenen Vielschicht-Keramikkondensators
Procédé pour la fabrication d'un condensateur multicouche céramique muni d'un répère

(30) Priority: 17.04.1990 NL 9000897
(43) Date of publication of application: 13.11.1991
(73) Proprietor: Philips Electronics N.V., 5621 BA Eindhoven (NL)
(72) Inventor: Scholten, Gerard John, NL-5656 AA Eindhoven (NL); Weekamp, Johannus Wilhelmus, NL-5656 AA Eindhoven (NL)
(74) Representative: van der Veer, Johannis Leendert

(56) References cited:
- DE-A- 3 312 736
- US-A- 3 380 854
- 36TH ELECTRONIC COMPONENTS CONFERENCE, Seattle, Washington, 5th-7th May 1986, pp. 655-658, IEEE, New York, US; D.V. PERRY, Jr. et al.: "Quality evaluation of CO2, and ND:YAG laser marking of ceramic chip capacitors"

## Description

The invention relates to a method of manufacturing a ceramic multilayer capacitor having a marking. The name of the manufacturer and/or specific properties of multilayer capacitors can be readily inferred from the markings provided on said capacitors.

The manufacture of a ceramic multilayer capacitor having a marking on the surface is known per se. The methods concerned use an ink or a paint to provide the marking on the finished capacitor. Possible application techniques include, inter alia: screen printing, stamping, tampon (transfer) printing, offset printing, laser printing and jet printing. However, the provision of markings on finished products by means of said techniques is relatively expensive. Besides, it has been found that the marking capacity of most of these techniques is not very high. Marking capacity is to be understood to mean herein the maximum number of markings to be provided per unit area and per unit of time. In view of the advancing miniaturization of ceramic multilayer capacitors and, more in particular, of capacitors which are suitable for use by means of SMD-techniques (surface mountable devices), the latter disadvantage is becoming ever more onerous.

It is an object of the invention to provide, inter alia, a method by means of which the above disadvantages are overcome. The invention more particularly aims at providing a method by means of which a high marking capacity in a ceramic multilayer capacitor can be attained. The inventive method pursued should further be cost- effective and readily applicable in mass production. The markings provided should not or hardly adversely affect the mechanical strength and/or electrical properties of the ceramic capacitor.

These and other objects are achieved in accordance with the invention by a method of the type mentioned in the opening paragraph, characterized in that the marking is provided in the form of a relief in the surface of the unsintered capacitor, and in that the capacitor is subsequently subjected to a sintering treatment.

The invention is based on the unexpected result that, despite the relatively high sintering temperatures of 1200°C and more, a relief provided in accordance with the inventive method does not noticeably fill up and hence disappear during the sintering process to which the capacitor is subjected. Further it has been established that the provision of the markings in this manner has little if any noticeable adverse effect on the mechanical strength or electrical properties of the capacitor. Mechanical stresses which may be caused by providing the relief in the ceramic material are found to disappear in the sintering process.

There are various ways of providing the said relief in the unsintered ceramic surface of the multilayer capacitor. For example, markings can be scribed into the unsintered and ,hence, relatively soft ceramic material. Of particular interest, however, is the embodiment of the method according to the invention which is characterized in that the relief is impressed in the surface of the capacitor. As will be described hereinbelow, multilayer capacitors are manufactured from a relatively large multilayer plate. Said plate is successively broken or cut into strips and into the individual capacitor bodies which are being formed and which are subsequently sintered. In the known methods of providing markings on ceramic multilayer capacitors, the marking is provided on the individual, sintered capacitor bodies. Said bodies must be separately positioned in the marking process. The inventive method permits a large number (i.e. many hundreds) of ceramic multilayer capacitors having the same marking to be manufactured in a single process step. In said process step, a die, having a large number of identical markings, is pressed into the unsintered multilayer plate . The number of markings is equal to the number of capacitors which are manufactured from said plate. Subsequently, the multilayer plate is broken into individual capacitor bodies and sintered. In the method according to the invention, the marking can be provided in such a manner that the time-consuming process of positioning the individual capacitors can be omitted.

There is a further very advantageous embodiment of the method according to the invention which is preferred to the impression of the relief. Said method is characterized in that the marking is burnt into the surface of the capacitor. The unsintered ceramic of the multilayer plate contains a binder which holds the ceramic particles together. Prior to the sintering operation, said binder is fired at a relatively low temperature (approximately 400°C). However, it has been found that prior to firing said binder can be locally explosively removed by burning, while entraining ceramic particles, so that a marking in the form of a relief can be burnt into the unsintered ceramic material. As the inventive method is applied to unsintered ceramic material, the explosive removal of ceramic particles can take place under the influence of relatively low energy. By virtue thereof, the properties of the ceramic such as, for example, dielectric constant and electrical resistance are not or hardly adversely affected. The burning operation can be carried out by using a directed energetic beam such as, for example, an electron beam. Preferably, however, the marking is burnt into the capacitor surface by a laser beam. In this embodiment of the invention the marking capacity is found to be extremely high. This can be partly ascribed to the very low heat conduction of the unsintered ceramic material and to the fact that relatively little laser energy is required to evaporate the binder. Both aspects contribute to the fact that markings with a high resolution can be provided in the ceramic material. For example, markings in the form of letters and digits having maximum dimensions of 0.5 x 0.3 mm² and smaller can be realised without any problem. After the sintering of the multilayer capacitors, it was found that these markings were properly readable.

Embodiments of the invention are explained in greater detail by means of exemplary embodiments and the accompanying drawing, in which
Figure 1 is a top view of an unsintered multilayer plate which is provided with markings according to the inventive method;
Figure 2 is a longitudinal sectional view of a part of the multilayer plate of Figure 1, taken on the line II - II;
Figure 3 is a diagrammatic embodiment of the method according to the invention.

### Exemplary embodiment 1.

To carry out the method according to the invention, an unsintered ceramic multilayer plate for capacitors was used which was manufactured in a customary manner.

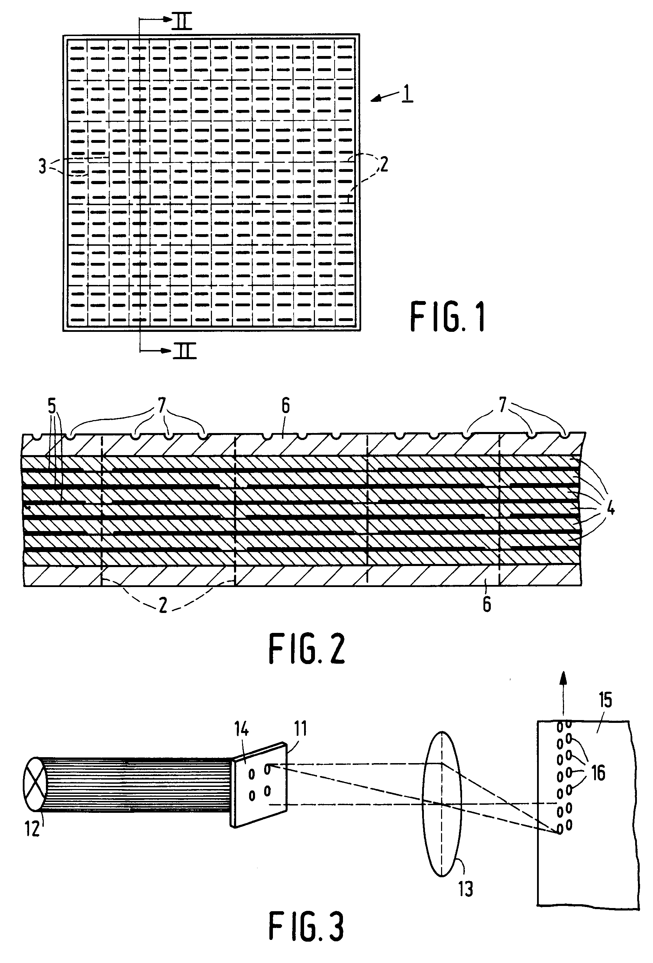

Figure 1 is a top view of such a plate 1. The dotted lines 2, 3 indicate the imaginary lines of fracture along which the ceramic multilayer plate is broken at a later stage to form, in succession, capacitor strips and individual capacitor bodies. Such a plate consists of a compressed stack of a large number (for example 10-50) sheets of ceramic material on which layers of electrode material are locally provided, for example, by means of screen printing. All the capacitor bodies which are being formed are provided with a marking (the number III) which is provided in relief in the surface of the unsintered capacitors.

Figure 2 is a longitudinal sectional view, taken on the line II - II of a part of the ceramic plate of Figure 1. In this sectional view, the individual ceramic sheets 4 and the layers 5 of an electrode material which are locally provided thereon are properly distinguishable. For clarity, only a few sheets 4 are shown. Coating layers 6, having an overall thickness of 0.06 mm, are provided on the upper side and the underside of the multilayer. Said coating layers are composed of a number of ceramic sheets 4 which are not provided with electrode material. Markings 7 are impressed in both coating layers 4 by means of dies. The number and distribution of the markings which are present on the dies as mirror images, is selected such that each of the parts of the plate 1 which are bounded by the dotted lines 2, 3 is provided with a marking. Preferably, the metal die is heated, to a temperature of 300°C, when the markings are provided in the ceramic plate. This has a favourable effect on the contrast.

After providing the markings, the plate was divided into individual multilayer capacitors, for example by means of the method described in EP-A 162.508. Subsequently, the capacitors were prefired to remove the binder for at least 12 hours at 350°C, after which they were sintered for at least 6 hours at 1250°C. Finally, the end faces of the capacitors were provided with electrically conducting end contacts.

The dimensions of the surface of the capacitor to be marked were 2 mm at 1.2 mm. Several markings having a maximum dimension of 0.5 mm were provided thereon. The depth of the relief of the marking was 0.01 - 0.02 mm. The markings could be properly read.

### Exemplary embodiment 2.

An unsintered ceramic multilayer plate, as described in exemplary embodiment 1, was provided with markings 7 by means of a TEA CO₂ laser (λ = 10.6 µm; power 3J). Figure 3 diagrammatically shows how the inventive method was carried out by laser marking. A metal mask 11 in which the desired markings 14 were etched was arranged between a laser source 12 and a convergent lens 13. The unsintered multilayer plate 15 to be marked is located just beyond the focal point of the lens. Since only a low energy density (± 3 J/cm²) is required, several capacitor bodies could be marked in a single pulse. The pulse time was 1 µs at a frequency of 50 Hz. By virtue of this short pulse time the multilayer plate did not have to be stationary during pulsing but could be marked on assembly lines. The plate 5 moved in the direction of the arrow. It was found to be advantageous to conduct an air flow over the multilayer plate during the laser marking operation. In this manner, the explosively removed ceramic particles were discharged. Without said air flow the ceramic particles would drop back into the relief formed, thus causing the contrast to be reduced. By means of said marking method, markings 16 having a maximum dimension of 0.4 mm and smaller could be easily provided in the unsintered ceramic material. After breaking, firing and sintering of the ceramic multilayer plate, as described in example 1, it was found that the markings provided were properly readable.

### Exemplary embodiment 3.

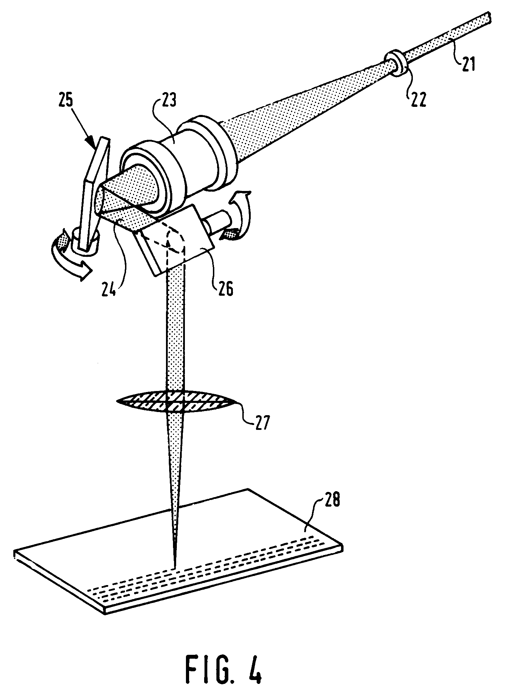

Figure 4 shows how the inventive method is carried out by laser engraving. A collimated laser beam 21 is generated by, for example, a Nd-YAG laser (not shown). Said laser beam is converted to a collimated laser beam 24 through a negative lens 22 and a positive lens 23, the cross-section of said laser beam 24 being larger than that of laser beam 21. Via rotatable mirrors 25 and 26 and positive lens 27, laser beam 21 is focussed to the unsintered ceramic multilayer plate 28. The mirrors 25 and 26 which can be rotated in the direction of the arrows can be controlled by means of a computer. The capacitors being formed from the multilayer plate are separately provided with a marking by means of said laser engraving method. It has been found that this method permits the engraving of markings having maximum dimensions of 0.4 mm. These markings were found to be properly readable after the sintering treatment.

## Claims

1. A method of manufacturing a ceramic multilayer capacitor which is provided with a marking, characterized in that said marking is provided in the form of a relief in a surface of the unsintered capacitor, and in that the capacitor is subsequently subjected to a sintering treatment.

2. A method as claimed in Claim 1, characterized in that the relief is impressed in the surface of the capacitor.

3. A method as claimed in Claim 1, characterized in that the marking is burnt into the surface of the capacitor.

4. A method as claimed in Claim 3, characterized in that a laser beam is used to burn-in the marking.

## Patentansprüche

1. Verfahren zum Herstellen eines mit einem Merkzeichen versehenen Vielschicht-Keramikkondensators, dadurch gekennzeichnet, daß das Merkzeichen in Form eines Reliefs in der Oberfläche des ungesinterten Kondensators eingeprägt wird und daß der Kondensator daraufhin einer Sinterbehandlung ausgesetzt wird.

2. Verfahren nach Anspruch 1, dadurch gekennzeichnet, daß das relief in der Oberfläche des Kondensators eingeprägt wird.

3. Verfahren nach Anspruch 1, dadurch gekennzeichnet, daß das Merkzeichen in die Oberfläche des Kondensators eingebrannt wird.

4. Verfahren nach Anspruch 3, dadurch gekennzeichnet, daß zum Einbrennen des Merkzeichens ein Laserstrahl benutzt wird.

## Revendications

1. Procédé pour fabriquer un condensateur céramique à couches multiples muni d'un repère, caractérisé en ce que ledit repère est prévu en forme d'un relief dans la surface du condensateur non fritté, et en ce que subséquemment le condensateur est soumis à un traitement de frittage.

2. Procédé selon la revendication 1, caractérisé en ce que le relief est imprimé dans la surface du condensateur.

3. Procédé selon la revendication 1, caractérisé en ce que le repère est pyrogravé dans la surface du condensateur.

4. Procédé selon la revendication 3, caractérisé en ce que l'on utilise un faisceau laser pour pyrograver le repère.
